(19) Europäisches Patentamt
European Patent Office
Office européen des brevets

(11) **EP 0 984 031 B1**

(12) **EUROPEAN PATENT SPECIFICATION**

(45) Date of publication and mention
of the grant of the patent:
**28.12.2005 Bulletin 2005/52**

(51) Int Cl.7: **C08J 5/24**, B32B 5/28,
C08L 61/14

(21) Application number: **99905258.2**

(22) Date of filing: **19.02.1999**

(86) International application number:
**PCT/JP1999/000765**

(87) International publication number:
**WO 1999/042516 (26.08.1999 Gazette 1999/34)**

(54) **MOLDING MATERIAL, INNER MATERIAL USING THE SAME, AND METHOD FOR PRODUCING THE SAME**

FORMMATERIAL, SEINE BENUTZUNG ALS INNENMATERIAL UND VERFAHREN ZU SEINER HERSTELLUNG

MATERIAU DE MOULAGE, MATERIAU INTERIEUR L'UTILISANT ET SON PROCEDE DE PRODUCTION

(84) Designated Contracting States:
**DE FR GB**

(30) Priority: **20.02.1998 JP 5609098**

(43) Date of publication of application:
**08.03.2000 Bulletin 2000/10**

(73) Proprietor: **NAGOYA OILCHEMICAL CO., LTD.**
**Tokai-shi, Aichi 476-0001 (JP)**

(72) Inventors:
• **HORIKI, Seinosuke,**
**Nagoya Oilchemical Co., Ltd.**
**Tokai-shi, Aichi 476-0001 (JP)**
• **OGAWA, Masanori,**
**Nagoya Oilchemical Co., Ltd.**
**Tokai-shi, Aichi 476-0001 (JP)**
• **KIOKA, Norihiko, Nagoya Oilchemical Co., Ltd.**
**Tokai-shi, Aichi 476-0001 (JP)**
• **KAJITA, Takehiko, Nagoya Oilchemical Co., Ltd.**
**Tokai-shi, Aichi 476-0001 (JP)**
• **ITO, Kuninori, Nagoya Oilchemical Co., Ltd.**
**Tokai-shi, Aichi 476-0001 (JP)**

(74) Representative: **Vossius & Partner**
**Siebertstrasse 4**
**81675 München (DE)**

(56) References cited:
JP-A- 4 016 337          JP-A- 5 286 069
JP-A- 6 143 448          JP-A- 7 142 633
JP-A- 9 003 745          JP-A- 9 059 400
JP-A- 9 174 546          JP-A- 9 199 829
JP-A- 10 029 260         JP-A- 10 051 095
JP-A- 10 279 720         US-A- 3 322 488

• PATENT ABSTRACTS OF JAPAN vol. 1995, no. 05, 30 June 1995 (1995-06-30) & JP 07 041642 A (NAGOYA YUKA KK), 10 February 1995 (1995-02-10)
• PATENT ABSTRACTS OF JAPAN vol. 1995, no. 05, 30 June 1995 (1995-06-30) & JP 07 041641 A (NAGOYA YUKA KK), 10 February 1995 (1995-02-10)
• PATENT ABSTRACTS OF JAPAN vol. 016, no. 370 (M-1292), 10 August 1992 (1992-08-10) & JP 04 118208 A (DAINIPPON INK & CHEM INC), 20 April 1992 (1992-04-20)
• PATENT ABSTRACTS OF JAPAN vol. 016, no. 310 (C-0960), 8 July 1992 (1992-07-08) & JP 04 088095 A (KAO CORP), 19 March 1992 (1992-03-19)
• PATENT ABSTRACTS OF JAPAN vol. 015, no. 345 (C-0864), 3 September 1991 (1991-09-03) & JP 03 137045 A (KAO CORP), 11 June 1991 (1991-06-11)
• MIOJI KAMINAKA, "Phenal Jushi", (1971), PLASTIC GIJUTSU ZENSHO, No. 15, K.K. KOGYO CHOSAKAI, pages 16-17, XP002925764.

EP 0 984 031 B1

## EP 0 984 031 B1

**Description**

The present invention relates to a material to be molded used as interior material of the automobile, building material and the like. Further, the present invention relates to interior material using said material to be molded. Still further, the present invention relates to a manufacturing method of said material.

Hitherto, a material to be molded wherein a synthetic resin is impregnated in a porous material such as a textile sheet and the like has been provided. Said synthetic resin to be impregnated in said porous material is a thermoplastic resin or thermosetting resin.

To impregnate said resin in said porous material, said porous material is dipped in the emulsion or solution of said resin and then said porous material is heated to dry.

JP-A-7-41642 discloses a resin impregnated porous material wherein said resin is a sulfomethylated condensate of aminoplast, phenolic compound and formaldehyde. JP-A-7-41641 discloses a resin impregnated porous material wherein said resin is sulfomethylated co-condensate of monohydric phenol and/or polyhydric phenol condensate having methylol group.

Said traditional material to be molded has problems that in the case where the thermoplastic resin is impregnated in said porous material, said material has a long storage life after drying but a poor heat resistance while in the case where the thermosetting resin is impregnated in said porous material, said material has a good heat resistance but a short storage life.

An improvement has been provided wherein a mixture of a thermoplastic resin and a thermosetting resin is impregnated in said porous material and when said material is heated to dry, said thermosetting resin contained in said material is completely cured. In said improvement, moldability of said material is given by the thermoplastic resin impregnated in said porous material and as the thermosetting resin impregnated in said porous material has been completely cured during drying with heat said material has a long storage life but the deep drawing molding of said material may be difficult and further the thermoplastic resin impregnated in said porous material has a bad influence on the heat resistance of the molded material.

Accordingly, the object of the present invention is to provide a material to be molded which has a good moldability and a long storage life and further gives a molded material having good heat resistance.

To attain this object, the present invention provides a material to be molded consisting of a porous material in which terhmosetting resin(s) in B-stage is(are) impregnated, and further the present invention provides a method for manufacture of a material to be molded comprising impregnating a precondensation polymer solution of a thermosetting resin into a porous material and heating and drying said porous material to condensate slightly said precondensation polymer to be in B-stage.

According to said material to be molded, since said thermosetting resin impregnated in said porous material is at B-stage, said material has a good stability and a long storage life and further has a good moldability in short time hot pressing and resulting molded material has a good dimensional stability and heat resistance.

According to the present invention, said thermosetting resin is a condensation polymer of B-stage of a phenolic compound and aldehyde and/or aldehyde donor, and said condensation polymer is preferably produced by condensation of a phenolic compound and aldehyde and/or aldehyde donor by using ammonia and/or amine. Further said condensation polymer is partially or wholly sulfomethylated and/or sulfimethylated.

Said material to be molded may be in the shape of sheet, and in this case a molded material consisting a base sheet and said cured material which is laminated partially or wholly to said base sheet as a surface layer wherein said thermosetting resin impregnated in said material is cured is provided.

Further, interior material consisting of a base sheet made of said cured material wherein the thermosetting resin impregnated in said material is cured and a surface layer laminated on said base sheet is provided. In this case it is desirable that said base sheet and said surface layer are bonded together by an adhesive dotted in the lamination interface.

In said manufacturing method of said material to be molded, it is preferable that said precondensation polymer solution is foamed chemically and/or mechanically and said porous material is contacted with said foamed precondensation polymer solution and then said porous material is pressed to impregnate said foamed precondensation polymer solution into said porous material. Still further, said precondensation polymer of said thermosetting resin is preferably precondensation polymer produced by condensation of a phenolic compound and aldehyde and/or aldehyde donor and said phenolic compound and aldehyde and/or aldehyde donor are preferably condensated by using ammonia and/or amine and further it is preferable that said precondensation polymer of said phenolic resin is partially or wholly sulfomethylated and/or sulfimethylated by adding a sulfomethylation reagent and/or a sulfimethylation reagent at any stage.

DETAILED DESCRIPTION

A. Material to be molded

[Thermosetting resin]

Suitable thermosetting resins are such as phenolic resin, urea resin, melamine resin, benzoguanamine resin, urea-melamine co-condensation resin, and the like. Ordinarily said thermosetting resin is provided as water solution or water-organic solvent solution of precondensation polymer.

According to the present invention the thermosetting resin is a phenolic resin which is the condensation polymer of phenolic compound and aldehyde and/or aldehyde donor. Further, preferably thermosetting resin is a phenolic resin produced by condensation of phenolic compound and aldehyde and/or aldehyde donor by using ammonia and/or amine, and still further, said phenolic resin is partially or wholly sulfomethylated and/or sulfimethylated.

When said phenolic compound and aldehyde and/or aldehyde donor are condensated by using ammonia and/or amine, the curing start temperature of the resulting precondensation polymer can be controlled.

Further, when said phenolic resin is sulfomethylated and /or sulfimetylated, the water solution of said phenolic resin has a good stability to avoid the phase separation of said water solution and said water solution has a high curing speed.

[Phenolic compound]

Said phenolic compound used in the present invention may be monohydric phenol or polyhydric phenol or a mixture of monohydric phenol and polyhydric phenol. Thermosetting resin of the present invention may also include a pre-co-condensation polymer produced by co-condensation of a precondensation polymer of monohydric phenol and aldehyde and/or aldehyde donor, and a precondensation polymer of polyhydric phenol and aldehyde and/or aldehyde donor.

[Monohydric phenol]

As monohydric phenol, phenol; alkyl phenol such as o-cresol, m-cresol, p-cresol, ethylphenol, isopropylphenol, xylenol, 3,5-xylenol, butylphenol, t-butylphenol, nonylphenol and the like; substituted monohydric phenol such as o-fluorophenol, m-fluorophenol, p-fluorophenol, o-chlorophenol, m-chlorophenol, p-chlorophenol, o-bromophenol, m-bromophenol, p-bromophenol, o-iodinephenol, m-iodinephenol, p-iodinephenol, o-aminophenol, m-aminophenol, p-aminophenol, o-nitrophenol, m-nitrophenol, p-nitrophenol, 2,4-dinitrophenol, 2,4,6-trinitrophenol and the like; polycyclic monohydric phenol such as naphthol and the like may be used. The monohydric phenol may be used singly or as a mixture of two or more kinds.

[Polyhydric phenol]

As polyhydric phenol, resorcinol, alkyl resorcinol, pyrogallol, catechol, alkyl catechol, hydroquinone, alkyl hydroquinone, phloroglucinol, bisphenol, dihydroxynaphthalene and the like may be used. The polyhydric phenol may be used singly or as a mixture of two or more kinds. In the polyhydric phenol, resorcinol or alkyl resorcinol is preferable, particularly alkyl resorcinol with a higher reaction rate with aldehyde than resorcinol is preferable.

As alkyl resorcinol, for example, 5-methyl resorcinol, 5-ethyl resorcinol, 5-propyl resorcinol, 5-n-buthyl resorcinol, 4,5-dimethyl resorcinol, 2,5-demethyl resorcinol, 4,5-diethyl resorcinol, 2,5-diethyl resorcinol, 4,5-dipropyl resorcinol, 2,5-dipropyl resorcinol, 4-methyl-5-ethyl resorcinol, 2-methyl-5-ethyl resorcinol, 2-methyl-5-propyl resorcinol, 2,4,5-trimethyl resorcinol, 2,4,5-triethyl resorcinol and the like may be used.

Polyhydric phenol mixture produced by the dry distillation of the oil shale produced in Estonia is cheap and contains highly reactive alkyl resorcinols such as 5-methyl resorcinol in a large quantity so said polyhydric phenol mixture may be desirable for the present invention.

[Aldehyde and/or aldehyde donor]

Aldehyde and/or aldehyde donor is a compound or a mixture of compounds which produce aldehyde by decomposition. Said aldehyde or aldehyde donor is such as, formaldehyde, paraformaldehyde, trioxane, acetaldehyde, propionaldehyde, polyoxymethylene, chloral, hexamethylenetetramine, fulfral, glyoxal, n-butylaldehyde, caproaldehyde, allylaldehyde, benzaldehyde, crotonaldehyde, acrolein, tetraoxymethylen e, phenylacetaldehyde, o-tolualdehyde, salicylaldehyde and the like may be used singly or as a mixture of two or more kinds.

[Ammonia and/or amine]

Said phenolic compound and aldehyde and/or aldehyde donor are preferably condensated by using ammonia and or amine and said amine is such as, aliphatic primary amine such as methylamine, ethylamine, propylamine, butylamine, amylamine, hexylamine, heptylamine, octylamine, nonylamine, desylamine, undecylamine, dodecylamine, tridecylamine, tetradecylamine, pentadecylamine, cetylamine and the like; aliphatic secondary amine such as dimethylamine, diethylamine, dipropylamine, diisopropylamine, dibutylamine, diamylamine and the like; aliphatic tertiary amine such as trimethylamine, triethylamine and the like; aliphatic unsaturated amine such as allylamine, diallylamine, triallylamine; alicyclic amine such as cyclopropylamine, cyclobutylamine, cyclopentylamine, cyclohexylamine and the like; aromatic amine such as aniline, methylaniline, dimethylaniline, ethylaniline, o-toluidine, m-toluidine, p-toluidine, benzylamine, dibenzylamine, tribenzylamine, diphenylamine, triphenylamine, $\alpha$-naphthylamine, $\beta$-naphthylamine and the like; monoethanolamine, diethanolamine, triethanolamine; hexamethylenetetramine; pyridine and the like may be used singly or as a mixture of two or more kinds.

Ammonia is one of the most preferable catalysts in the present invention.

[Sulfimethylation reagent]

Sulfimethylation reagent used for sulfimethylation of said phenolic resin is such as aliphatic or aromatic aldehyde alkaline metal sulfoxylate such as formaldehyde sodium sulfoxylate (Rongalit), benzaldehyde soduim xylate and the like; alkaline metal or alkaline earth metal hydrosulfite (dithionite) such as sodium hydrosulfite, magnesium hydrosulfite and the like; alkyl sulfoxylate such as sodium ethylsulfoxylate and the like; hydroxy alkane sulfinate such as hydroxymethane sulfinate and the like may be used.

[Sulfomethylation reagent]

Sulfomethylation reagent used for sulfomethylation of said phenolic resin is such as water-soluble sulfite produced by the reaction of sulfurous acid, bisulfurous acid or metabisulfurous acid and alkaline metal, quaternary amine such as trimethylamine or quaternary ammonium such as benzyltrimethylammonium and the like; or hydroxy alkane sulfonate such as hydroxymethanesulfo nate produced by the raction of the above water-soluble sulfite and aldehyde may be used.

[Other components]

When said thermosetting resin is produced, if desired, the following other components may be added. Said other components are, for example, acidic curing agent: inorganic or organic acid such as hydrochloric acid, sulfuric acid, orthophosphoric acid, boric acid, oxalic acid, formic acid, acetic acid, butyric acid, benzenesulfonic acid, phenolsulfonic acid, paratoluensulfonic acid, naphthalene-$\alpha$-sulfonic acid, naphthalene-$\beta$-sulfonic acid and the like; organic ester such as dimethyl oxalate; acid anhydride such as maleic anhydride, phthalic anhydride and the like; ammonium salt such as ammonium chloride, ammonium sulfate, ammonium nitrate, ammonium oxalate, ammonium acetate, ammonium phosphate, ammonium thiocyanate, ammonium imidosulfonate and the like; organic halide such as mono chloro acetic acid or its sodium salt, $\alpha,\alpha'$-dichlorohydrin and the like; amine hydrochloride such as triethanolamine hydrocloride, aniline hydrocloride and the like; urea adduct such as urea salicylate adduct, urea stearate adduct, urea heptanoate adduct and the like; N-trimethyltaurine; zinc chloride; ferric chloride and the like;
alkaline curing agent: alkaline metal or alkaline earth metal hydroxide such as sodium hydroxide, potassium hydroxide, barium hydroxide, calcium hydroxide and the like; alkaline earth metal oxide such as lime; alkaline metal weak acid salt such as sodium carbonate, sodium hydrogensulfite, sodium acetate, sodium phosphate and the like; or
aldehyde or compound which produces aldehyde by decomposition such as formaldehyde, paraformaldehyde, trioxane, acetaldehyde, propionaldehyde, polyoxymethylene, chloral, hexamethylenetetramine, furfural, glyoxal, n-buthylaldehyde, caproaldehyde, allylaldehyde, benzaldehyde, chrotonaldehyde, acrolein, tetraoxymethylene, phenylacetaldehyde, o-tolualdehyde, salicylaldehyde, methylolurea, methylated methylolurea, urea resin, methylolmelamine, methylated methylolmelamine, alkylolated triazone derivative and the like may be used as a curing agent.

If necessary, besides the above mentioned curing agent, the third component such as monohydric phenolic resin, polyhydric phenolic resin, urea resin, amino resin such as melamine resin; natural rubber or its derivatives; synthetic rubber such as styrene-butadiene rubber, acrylonitril-butadiene rubber, chloroprene rubber, ethylene-propylene rubber, isoprene rubber, isoprene-isobutylene rubber and the like; monopolymer or copolymer of vinyl monomer such as vinylacetate, vinylpropionate, styrene, acryl ester, metacryl ester, acrylonitril, acrylic acid, metacrylic acid, maleic acid, vinylchloride, vinylidenechloride, vinylpyridine and the like; emulsion, latex or water solution of various synthetic resins such as polyurethane, polyamide, epoxy resin, butylal resin, polyethylene, polypropylene, vinylacetate-ethylene copolymer, chlorinated polyethylene, chlorinated polypropylene, polyester and the like; water-soluble polymer or natural gum such as polyvinylalcohol, sodium alginate, starch, starch derivatives, glue, gelatin, blood powder, methyl cellulose, carboxymethyl cellulose, hydroxyethyl cellulose, polyacrylate, polyacrylamide and the like; the filler such as calcium carbonate, talc, plaster, carbon black, wood powder, walnut powder, coconut shell flour, flour, rice flour and the like; surface-active agent; higher fatty acid such as stearic acid, palmitic acid and the like; higher alcohol such as palmityl alcohol, stearyl alcohol and the like; fatty ester such as butyryl stearate, glycerin monostearate and the like; fatty amide; natural wax such as carnauba wax or synthetic wax; the mold release agent such as paraffin, paraffin oil, silicone oil, silicone resin, fluorine resin, polyvinylalcohol, grease and the like; the low-boiling solvent such as hexane, butane, n-pentane, alcohol, ether, methylene chloride, carbon tetrachloride, chlorofluoromethane, 1,1,2-trichloro-1,1,2-trifluoromethane and the like; the compound which produces gas such as azodicarbon amide, dinitrosopentamethylenetetramine, P,P'-oxybis(benzenesu lfonylhydrazide), azobis-2,2'-(2-methylpropanenitrile) and the like; the material or compound which reacts with the acid curing agent producing carbonic acid gas, for example, sodium carbonate or bicarbonate, potassium carbonate or bicarbonate, ammonium carbonate or bicarbonate, calcium carbonate or bicarbonate; the blowing agent such as thermoplastic expandable minute sphere which is micro-capsule of n-pentane, isopentane, butane, isobutane and the like; the hollow sphere such as silas balloon, pearlite, glass balloon, expanded glass, hollow ceramic and the like; the foamed body or the foamed sphere such as foamed polyethylene, foamed polystylene, foamed polypropylene and the like; the pigment, dye, the flame-retardant, the flame-proof agent, insectifuge, the antioxidant agent, the ultraviolet absorber; DBP, DOP; the phthalate plasticizer such as dicyclohexyl phthalate; the plasticizer such as tricresyl phosphate and the like also may be added to denature the above thermosetting synthetic resin by co-condensation or mixing and the like.

[Production of thermosetting resin]

Said thermosetting resin may be produced by the ordinary method. In the case where said thermosetting resin is precondensation polymer of phenolic resin produced by condensation of phenolic compound and aldehyde and/or aldehyde donor by using ammonia and/or amine, said precondensation polymer can be produced by (a) condensation of monohydric phenol and/or polyhydric phenol and aldehyde and/or aldehyde donor by using ammonia and/or amine or (b) co-condensation of precondensation polymer A produced by condensation of monohydric phenol and aldehyde and/or aldehyde donor by using ammonia and/or amine and polyhydric phenol B and/or precondensation polymer C produced by condensation of polyhydric phenol and aldehyde and/or aldehyde donor.

In the case of condensation (a) of monohydric phenol and/or polyhydric phenol and aldehyde and/or aldehyde donor, ordinarily 0.2 mol to 3 mol of aldehyde and/or aldehyde donor is(are) added to 1 mol of monohydric phenol and 0.1 mol to 0.8 mol of aldehyde and/or aldehyde donor is(are) added to 1 mol of polyhydric phenol and if necessary, solvent, other component(s), catalyst, and ammonia and/or amine are further added to react by heating at a liquid temperature in the range between 55 and 100°C for 8 to 20 hours. In said reaction, aldehyde and/or aldehyde donor can be added at one time when the reaction starts or can be added divisionally or by continuous dropping.

Preferably 0.001 to 20 % by weight, more preferably 0.001 to 10 % by weight of ammonia and/or amine is added to said phenolic compound. By additional amount of said ammonia and/or amine, the temperature to start curing of the resulting precondensation polymer of said thermosetting resin (the curing rate suddenly becomes large at this temperature) can be controlled.

In the case of 2-step co-condensation (b), said precondensation polymer (A) produced by the above mentioned method (a) and polyhydric phenol B and/or said precondensation polymer C produced by the above mentioned method (c) are mixed together and if necessary, aldehyde and/or aldehyde donor, solvent, complexing agent, other component(s), catalyst, and ammonia and/or amine are added and said mixture is reacted at a liquid temperature in the range between 60 and 100°C for 1 to 10 hours.

Preferably, total additional amount of polyhydric phenol is 0.01 mol to 3 mol for 1 mol of monohydric phenol and 0.001 to 20 % by weight, more preferably, 0.01 to 15 % by weight of ammonia and/or amine is(are) added to said phenolic compound.

Said complexing agent may be added for relaxation of the reaction and said complexing agent is such as a compound having the ketone group or the amide group which can form a complex with the hydroxy group of said phenolic compound. Said compound is such as acetone, caprolactam, and the like and aceton is one of the most preferable complexing agents. Ordinarily, 0.4 mol to 0.8 mol of said complexing agent is added to 1 mol of polyhydric phenol. Said complexing agent also may be added when said precondensation polymer C is produced.

As a solvent, water is usually used. If necessary, one or more kinds of water-soluble or hydrophilic organic solvent may be used. The solvent is, for example, the alcohol group such as methanol, ethanol, n-propanol, isopropanol, n-butanol, isobutanol, s-butanol, t-butanol, n-amyl alcohol, isoamyl alcohol, n-hexanol, methylamyl alcohol, 2-ethylbutanol, n-heptanol, n-octanol, trimethylnonyl alcohol, cyclohexanol, benzyl alcohol, fulfuryl alcohol, tetrahydrofulfuryl alcohol, abiethyl alcohol, diaceton alcohol and the like; the ketone group such as acetone, methylacetone, methylethylketone, methyl-n-propylketone, methyl-n-butylketone, methylisobutylketone, diethylketone, di-n-propylketone, diisobutylketone, acetonyl aceton, methyloxide, cyclohexanone, methylcyclohexanone, acetophenone, camphoric and the like; glycol group such as ethyleneglycol, diethyleneglycol, triethyleneglycol, propyleneglycol, trimethyleneglycol, polyethyleneglycol and the like; the glycol ether group such as ethyleneglycol monomethyl ether, ethyleneglycol monoethyl ether, ethyleneglycol isopropyl ether, diethyleneglycol monomethyl ether, triethyleneglycol monomethyl ether and the like; the glycol ester group or its derivatives such as ethyleneglycol diacetate, diethyleneglycol monoethylether acetate and the like; the ether group such as 1,4-dioxane and the like; diethylcellsolve, diethylcarbitol, ethyllactate, isopropyllactate, diglycoldiacetate, dimethylformamide and the like.

Acetone and the like act as a solvent and a complexing agent of alkylresorcinol and bring a mild reaction.

Further, in the case where sulfomethylated and/or sulfimethylated precondensation polymer of phenolic resin is used as a thermosetting resin, said precondensation polymer may be produced by sulfomethylation and/or sulfimethylation of phenolic compound and/or precondensation polymer by adding a sulfomethylation reagent and/or a sulfimethylation reagent at any stage.

The sulfomethylation reagent and/or the sulfimethylation reagent may be added at any stage before or during or after condensation reaction of monohydric phenol and/or polyhydric phenol and aldehyde and/or aldehyde donor and further the sulfomethylation reagent and/or the sulfimethylation reagent may be added at any stage before or during or after co-condensation reaction of said precondensation polymer A and polyhydric phenol B and/or precondensation polymer C.

Ordinarily, the total additional amount of the sulfomethylation reagent and/or the sulfimethylation reagent is in the range between 0.01 mol and 1.5 mol for 1 mol of phenolic compound and the preferable total additional amount is in the range between 0.01 mol and 0.8 mol to maintain a smooth curing property, a good physical property and the like of the resulting precondensation polymer.

Said sulfomethylated and/or sulfimethylated precondensation polymer of phenolic resin has(have) a good stability in the solution so that said solution does not produce phase separation and further has (have) a large curing speed.

[Porous material]

Porous material used in the present invention includes fiber material, foamed plastic having a connected cell structure, sintering material of plastic beads, and the like.

As fiber used in said fiber material, natural fiber such as cotton, linen, wool, silk, kenaf, coconut fiber, bamboo fiber; organic synthetic fiber such as polyamide fiber, polyester fiber, acrylic fiber, viscose fiber, acetate fiber, vinylchloride fiber, vinylidenechloride fiber and the like; inorganic fiber such as asbestos fiber, glass fiber, carbon fiber, ceramic fiber, metal fiber, whisker and the like; or reclaimed fiber which is produced by splitting of scraps of textile products using the above fiber; mixture of two or more kinds of fiber; or mixture of the above fiber and fiber having a low melting point such as polyester fiber, polypropylene fiber, polyethylene fiber, polyamide fiber and the like which have 200 °C or less melting point may be used.

Said fiber material may be sheet such as non-woven fabric, felt, fabric, knitting, their laminated sheet and the like, and further said textile material may be textile piece, web, sliver, and the like. Powder of a heat sensitive polymer such as polyethylene powder, polyamide powder, polyvinylidene chloride powder, polyester powder having a low melting point and the like may desirably be added to said textile material.

Said foamed plastic may be such as foamed polyurethane having a connected cell structure, foamed polyolefine such as foamed polyethylene, foamed polypropylene, foamed polyvinylchloride, foamed polystyrene, foamed amino resin such as melamine resin and urea resin, foamed phenol resin and the like. In the case where said foamed plastic is used as material for the base of interior material, said foamed plastic may be usually provided in the shape of sheet but if desired, said foamed plastic may be provided in the shape of block, pellet and the like.

[Manufacture of the material to be molded]

To manufacture the material to be molded in the present invention, a solution of the precondensation polymer of said thermosetting resin is impregnated into said porous material. Well known methods such as the dipping method, the spraying method and the like are used as impregnating methods and said precondensation polymer solution is preferably foamed chemically and/or mechanically. In this case, said porous material is dipped in said foamed precondensation polymer solution with pressing to impregnate said foamed precondensation polymer solution into said porous material.

In the case where said foamed precondensation polymer solution is used, dilution of said precondensation polymer solution with water or a solvent may not be necessary to control the impregnating amount so that drying time can be shortened by reducing water or a solvent in said porous material.

To foam mechanically said precondensation polymer solution, air is blown in said precondensation polymer solution or said precondensation polymer solution is agitated to mix air. Preferably, air is blown in said precondensation polymer solution with agitation and more preferably the foaming assistant, the foam stabilizer, and the like are added to said solution.

As the foaming assistant, for example, the anionic surface-active agent such as alkilbenzensulfonate, alkilsulfate, fatty ester, alkilnaphthalenesulfonate, alkilsulfosuccinate, alkildiphenyletherdisulfonate, alkilphosphate, polyoxyethylenealkil, alkilallylsulfate, naphthalenesulfonic acid-formalin condensate, polyoxyethylenealkilphosphate, the special polycarbonate polymer surface-active agent and the like; the nonionic surface-active agent such as polyoxyethylenealkilether, polyoxyethylenealkilallylether, polyoxyethylene derivative, oxyethyleneethoxypropylene block copolymer, sorbitan fatty ester, polyoxyethylene sorbitan fatty ester, polyoxyethylene sorbitol fatty ester, glyceric fatty ester, polyoxyethylene fatty ester, polyoxyethylene alkilamine, alkilalkanolamide and the like; the cationic surface-active agent such as octadecylamineacetate, imidazoline derivative acetate, polyalkylenepolyamine derivative or its salt, octadecyltrimethylammoniumchloride, halogenated trimethylaminoethylalkilamide, alkilpyridiniumsulfate, halogenated alkiltrimethylammonium and the like; yhe amphoteric surface-active agent; the silicone surface-active agent; the fluorine surface-active agent; the penetrating agent; natural fats and oils derivatives; the glycol group and the like may be used. As the foam stabilizer, water-soluble polymer such as polyacrylic acid, polymetacrylic acid, sodium or potassium polyacrylate or polymetacrylate, polyvinylalcohol, polyvinylpyrrolidone, partial saponified polyvinylacetate resin, carboxymethyl cellulose, hydroxyethyl cellulose and the like; the oil lubricant such as saccharides, stearic acid, zinc stearate, palmitic acid, long-chain fatty amide and the like may be used. Two or more kinds of foaming assistant or foam stabilizer may be used.

To foam chemically said precondensation polymer solution, the blowing agent such as the foaming agent, for example, the inorganic compound such as sodium bicarbonate, sodium carbonate, ammonium bicarbonate, ammonium carbonate, azide and the like, the nitroso compound, the azo compound, the sulfonyl compound and the like are added in said precondensation polymer solution and said solution is heated at a temperature higher than the decomposition temperature or the solvent having a low boiling point such as n-pentane, methanol, methylether, ethylether, methylenechloride, carbontetrachloride, chlorofluoromethane and the like is added to said solution and said solution is heated at a temperature higher than the boiling point to foam said solution. In said chemical foaming, said precondensation polymer solution is preferably agitated and the foaming assistant, the foam stabilizer and the like are preferably added in said solution in the same way as the case of mechanical foaming.

Further, said precondensation polymer solution is foamed by both said mechanical foaming and said chemical foaming at the same time.

Ordinarily, the expansion ratio of said precondensation polymer solution is in the range between 0.8 and 50 times, preferably 2 and 20 times and generally, when said porous material into which said precondensation polymer solution is impregnated has a low density, foams in said solution can be large while when said porous material has a high density, foams in said solution should preferably be fine.

To impregnate said precondensation polymer solution into said porous material, said mechanically and/or chemically foamed solution may be put in a dipping tank and then said porous material may be dipped in said solution in said dipping tank and said porous material to which said solution contact may be pressed by the squeeze roll, the press plate, and the like. Or said mechanically and/or chemically foamed precondensation polymer solution is supplied to one side or both side of said porous material just before pressing by said squeeze roll. In this case, if desired, two or more squeeze rolls may be arranged in series or in parallel.

By said pressing process, said mechanically and/or chemically foamed precondensation polymer solution is impregnated into said porous material.

Then said porous material impregnated with said precondensation polymer solution is dried by heating and in this process, a condensation polymer of B-stage is produced from said precondensation polymer. To maintain said condensation polymer at B-stage, the adding amount of the curing agent added to said precondensation polymer, the heating temperature, the heating time and the like should be adjusted and ordinarily, the heating temperature may be in the range between 40 and 170 °C, the heating time may be in the range between 0.1 and 5 hours. Ordinarily, heated air drying, infrared ray drying, radio-frequency drying and the like are applied in this drying process.

As above mentioned, said precondensation polymer of said thermosetting resin impregnating said porous material is maintained at B-stage so that said thermosetting resin in said porous material has a good stability and the resulting material to be molded has a long storage life and further as the water content of said thermosetting resin becomes small, the molding time is shortened and the puncture phenomenon by vapour would not arise. Further, after hot press molding of said material to be molded, said thermosetting resin is completely cured so that the resulting molded material has a good dimensional stability and heat resistance.

In the case where phenolic resin produced by the condensation of phenolic compound and aldehyde and/or aldehyde donor by using ammonia and/or amine is used, the curing rate of said phenolic resin becomes suddenly large at a temperature higher than a fixed temperature, so that said material to be molded in which said precondensation polymer of B-stage of said phenolic resin is impregnated has a good stability below said fixed temperature and a high curing speed above said fixed temperature. Accordingly, said material to be molded has a long storage life at a temperature below said fixed temperature and said material to be molded may be cured in a shorter time by heating at a temperature higher than said fixed temperature.

[Molding]

Said material to be molded in the present invention has a good moldability since said thermosetting resin of B-stage is impregnated in said material to be molded and ordinarily said material to be molded is molded by a hot press machine consisting of a lower mold part and an upper mold part having a desirable shape to be molded on their mold faces respectively. Temperature and time in said press process are settled such that said thermosetting resin of B-stage is completely cured and ordinarily press pressure is settled in the range between 1 and 10 kg/cm$^2$. In said press process, if desired, said material to be molded may be laminated with other sheet(s) to manufacture a laminated sheet.

The resulting molded material can be used especially as interior of the vehicle such as door-trim, a dashboard, head lining, flooring, an insulator hood, dash-inner, dash-outer, an engine under cover, trunk side-trim and the like or building material.

B. Molded material

Molded material in the present invention consists of a base and said sheet material to be molded which is laminated partially or wholly to said base and molded in a desirable shape wherein said thermosetting resin in said material to be molded has been cured such that said material to be molded has hardened after the molding process.

Said base is selected from any materials having moldability and said base may include such as foamed plastic, a particle board, a fiber board, felt, a plastic sheet, non-woven fabric containing textile having a low melting point, glass wool, asbestos, and the like.

Said foamed plastic may include such as foamed polyurethane, foamed polyolefin such as foamed polyethylene, foamed polypropylene, and the like, foamed polyvinylchloride, foamed polystyrene, foamed melamine resin, foamed urea resin, foamed phenol resin and the like.

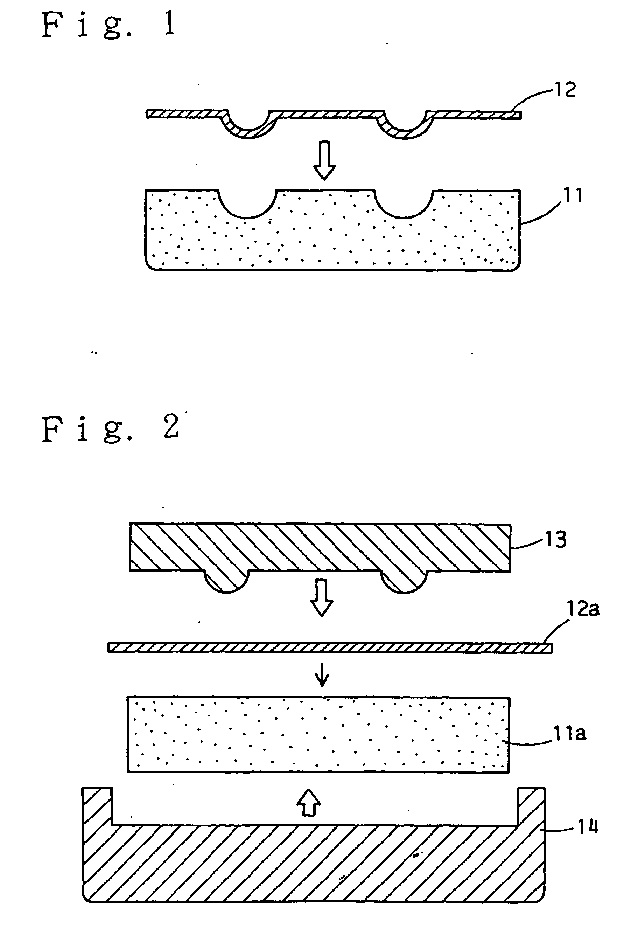

To manufacture said molded material, as shown in Fig. 1, the first method comprises molding said base (11) in a desirable shape, molding said sheet material to be molded (12) and laminating said molded sheet material (12) to said molded base (11).

To laminate said molded sheet material (12) to said molded base (11), an adhesive may be used or hot melting may be applied in the case of thermoplastic base.

As shown in Fig. 2, the second method comprises putting said sheet material to be molded (12a) on said base original (11a), and hot-pressing said sheet material (12A) and said base original (11a) by a hot press machine consisting of an upper mold part (13) and a lower mold part (14) having a desirable shape to be molded in their mold faces respectively. If desired, a hot-melt sheet, an adhesive made of such as natural resin, natural rubber, synthetic resin, synthetic rubber and the like may be inserted between said sheet materials (12a) and said base original (11a) depending on the material of said base original (11a).

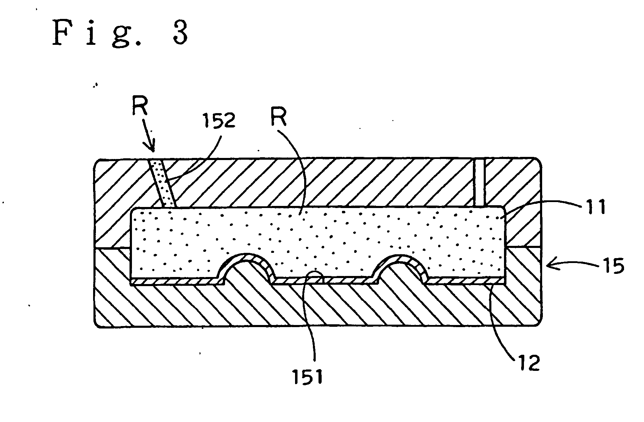

As shown in Fig. 3, the third method comprising molding said sheet material to be molded in a desirable shape, setting said molded and hardened sheet material (12) on the mold face (151) of a mold machine (15) and injecting an expandable liquid resin R into said mold machine (15) through an injecting gate (152) to foam and cure said expandable liquid resin R.

Said expandable liquid resin R may include expandable polyurethane resin, expandable polyolefin resin such as expandable polyethylene, expandable polypropylene, and the like, expandable polyvinylchloride resin, expandable polystyrene resin, expandable melamine resin, expandable urea resin, expandable phenol resin, and the like.

The resulting molded material of the present invention is manufactured as above mentioned and can be used as a wall sheet, a bed pad and the like, a cushion of a seat, a sofa, and the like, interior material, and the like.

The hardened sheet made of said sheet material to be molded is laminated to said base in said molded material in the present invention and as said sheet material has a much better moldability than ordinary textile sheet so that said molded material can be molded in any desirable shapes.

C. Interior Material

Interior material of the present invention consists of a base made of said material to be molded wherein said thermosetting resin in said material is cured and a surface layer as trim cover laminated to said base.

Said surface layer may be such as artificial leather, leather, textiles, knitting, non-woven fabric or layered material of said leathers and fabrics with foamed plastic such as foamed polyurethane, foamed polyethylene, foamed polypropylene, foamed polystylene, foamed polyvinylchloride.

Said surface layer is laminated to said base by an adhesive. Said adhesive can be any of the ordinary adhesives such as acrylic-type, synthetic-rubber type, elastomer-type, vinylacetate-type, vinylchloride-type, urearesin-type, melamineresin-type, phenolicresin-type, epoxyresin-type, and the like. Said adhesive is provided in solution or emulsion.

Further, hot-melt type adhesive may be used for the adhesive layer. Said hot-melt type adhesive may be single or mixture of two or more kinds of polyolefin resin such as polyethylene, polypropylene, ethylene-vinylacetate copolymer, ethylene-ethylacrylate copolymer and the like, modified polyolefin resin, polyrethane resin, polyester resin, or polyamide resin.

Said hot melt adhesive includes solution-type adhesive, emulsion-type adhesive, and dispersion-type adhesive wherein hot melt adhesive powder is dispersed in water.

It is preferable that said adhesive layer is dotted on said base and/or said surface layer in lamination interface. In this case, the molded shape of said interior material and emboss design of the surface of said interior material may not be harmed by the rigidity of said adhesive layer dotted in lamination interface such that molded shape and emboss design of said molded material become sharp. Further in the case where said surface layer has gas permeability, said adhesive layer also has gas permeability resulting in an interior material having a good sound proof property.

To dot said adhesive layer on the surface(s) of said base and/or said surface layer, the spray coating method, the relief printing method, the silk screen printing method, the masking method, and the like may be applied. In said masking method, the adhesive is coated on the surface(s) of said base and/or said surface layer which is covered by a masking sheet and by using the spray method, the knife coater, the roll coater, the flow coater and the like, said masking sheet is peeled from said surface(s).

One of the most desirable methods to dot the adhesive layer on the surface(s) of said base and/or said surface layer is to spray a dispersion of hot-melt type adhesive powder to said surface(s).

Ordinarily, said hot-melt type adhesive powder used in said dispersion has a size in the range between 20 and 400 mesh and said hot-melt type adhesive powder is dispersed in water in the amount of between 5 and 60 % by weight. One or more kinds of thickener such as methylcellulose, methoxycellulose; ethycellulose, ethoxycellulose, carboxymethylcellulose, and the like, one or more kinds of surface-active agent such as the anionic surface-active agent such as higher alcoholsulfate (Na salt or amine salt), alkylarylsulfonic cloride (Na salt or amine salt), alkylnaphthalenesulfon ate (Na salt or amine salt), alkylnaphthalenesulfonate condensation, alkylphosphate, dialkylsulfosuccinate, rosin soap, fatty ester (Na salt or amine salt), and the like, the nonionic surface-active agent such as polyoxyethylene alkylether, polyoxyethylene alkylphenolether, polyoxyethylene alkylester, polyoxyethylene alkylamine, polyoxyethylene alkylolamine, polyoxyethylene alkylamide, sorbitan alkylester, polyoxyethylene sorbitan alkylester, and the like, the cationic surface-active agent such as octadecyl amineacetate, imidazoline derivative acetate, polyalkylene polyamine derivatives or salt thereof, octadecyl trimethyl ammonium chloride, trimethyl aminoethyl alkylamide halogenide, alkylpyridinium sulfate, alkyltrimethyl ammonium halogenide and the like, can be added to said water. Using the thickener having spinnability is much more appropriate as a despersing agent. Said thickener having spinnability may be alkaline metal - sodium, potassium, lithium and the like - salt of polyacrylic acid, polymethacryl acid, alginic acid, and the like, water-soluble synthetic polymer such as polyethyleneoxide, plant mucilage such as Hibiscus manihot L., gluten, velvet mallow, Hydrangea paniculata sieb., and the like. Especially polyacrylic sodium is desirable as a thickener.

Ordinarily said thickener having spinnability is added in the amount such that the viscosity of said dispersion of said hot-melt type adhesive powder becomes between 50 and 10000cps/25°C depending on the molecular weight of said thickener. For instance, in the case where polysodium acrylate having a viscosity average polymerization degree about 38000 is used, said polysodium acrylate may be added in the amount in the range between about 0.01 and about 1.0 % by weight. -

Further, for example, polyethylene, polypropylene, ethylene-propylene copolymer, ethylene-vinylacetate copolymer, vinylchloride resin, vinylidene chloride resin, styrene resin, vinylacetate resin, fluorine resin, thermoplastic acrylic resin, thermoplastic polyester, ethermoplastic polyamide, thermoplastic urethane resin, thermosetting resin such as epoxy resin, melamine resin, urea formaldehyde resin, phenolic resin, resorcinol resin, alkyl resorcinol resin and the like, synthetic resin emulsion such as acrylonitrile-butadiene copolymer, styrene-butadiene copolymer, acrylonitrile-butadiene-styrene copolymer and the like, and synthetic rubber, elastomer powder and elastomer emulsion such as acrylic rubber, butyl rubber, silicone rubber, urethan rubber, fluorinated rubber, polysulfide rubber, graft rubber, butadiene rubber, isoprane rubber, chloroprene rubber, polyisobutylene rubber, polybutene rubber, isobutene-isoprene rubber, acrylate-butadiene rubber, styrene-butadiene rubber, acrylonitrile-butadiene rubber, pyridiene-butadiene rubber, styrene-isoprene rubber, acrylonitrile-chloroprene rubber, styrene-chloroprane rubber, copolymer such as styrene-butadiene-styrene copolymer, styrene-isoprene-styrene copolymer, styrene-hydrogen addition polyolefin-styrene copolymer, and block copolymer such as butadiene-styrene block copolymer, styrene rubber-intermediate block styrene copolymer and the like may be added to said dispersion of hot-melt type adhesive powder. Furthermore, if necessary, a filler such as calcium carbonate, talc, gypsum, carbon black, wood powder, walnut powder, coconuts husks, a thickener, a pigment, dye, a fire retardant, a flame retardant, an insect repellent, antiseptic, an antioxidant, an UV absorber, fluorescent dye, a surface active agent, a blowing agent, a softener and a water repellent agent such as paraffin, wax, silicone and the like, or a release agent, a plasticizer and the like may be added to said dispersion of hot-melt type adhesive powder.

In the case where said dispersion of said hot-melt type adhesive powder is sprayed on the surface(s) of said base and/or said surface layer, said base and/or said surface layer is(are) preferably sucked from the back side to attract said hot-melt type adhesive powder on said base and/or said surface layer, avoiding rebounding of said hot-melt type adhesive powder on the surface(s) of said base and/or said surface layer. Ordinarily, the coating amount of said dispersion of said hot-melt type adhesive powder is in the range between 5 and 100 g/m$^2$ as a solid. In the case where said thickener having spinnability is used, said dispersion of said hot-melt type adhesive possesses the structural viscosity showing spinnability such that when said dispersion is sprayed, said dispersion does not make mist but make small lumps to attach to the surface(s) of said base and/or said surface layer. Said small lumps of said dispersion does not go into naps but attaches to the surface of naps if the surface(s) of said base or said surface layer has(have) naps. Accordingly, said hot-melt type adhesive powder is effectively attached on the surface(s) of said base and/or said surface layer.

Said dispersion of said hot-melt type adhesive powder is sprayed on the surface(s) of said base and/or said surface layer as above mentioned and then said base and/or said surface layer is(are) heated to dry and melted hot-melt type adhesive powder attaches to the surface(s) of said base and/or said surface layer. The temperature of said heating process is higher than the melting point of said hot-melt type adhesive and ordinarily in the range between 100 and 200°C and heating time may be 5 seconds to 5 minutes.

Said surface layer (trim cover) is laminated on the surface of said base by said adhesive layer, and in the case where said adhesive is a solution-type adhesive or an emulsion-type adhesive, said base and said surface layer are attached together before said adhesive completely drys or in the case where said adhesive is a hot-melt type adhesive, said base and said surface layer are attached together after said hot-melt type adhesive is softened by heating.

The molding process may be carried out both before or simultaneously with or after lamination of said base and said surface layer.

In a case where said surface layer (trim cover) has gas permeability and the molding process is carried out after lamination of said base and said surface layer, air contained in said base or gas generated from synthetic resin contained in said base (for instance form aldehyde gas from phenol resin, carbonic acid gas or aqueous vapour from polyisocyanate) is exhausted smoothly through the dotted adhesive layer to outside to avoid puncture phenomenone of the resulting interior material and to solve the problem of smell of remaining gas in said interior material.

Said interior material can be used in various fields such as interior material of a trunk room of the automobile, interior material of a dash board of the automobile and the like. In the case where said base and said surface layer are laminated together by the dotted adhesive layer, the rigidity of said adhesive layer does not effect on the molded shape or emboss design of said interior material such that molded shape and emboss design of said interior material may become sharp. Further, said dotted adhesive layer has gas permeability when said surface layer has gas permeability, and the resulting interior material has a good sound proof property.

BRIEF DESCRIPTION OF THE DRAWINGS

Fig. 1 is a drawing to illustrate the manufacturing process of the molded material of an embodiment of the present invention.

Fig. 2 is a drawing to illustrate the manufacturing process of the molded material of another embodiment of the present invention.

Fig. 3 is a drawing to illustrate the manufacturing process of the molded material of further embodiment of the present invention.

Fig. 4 is a drawing to illustrate the manufacturing process of the material to be molded of an embodiment of the present invention.

Fig. 5 is a drawing to illustrate the molding process of the material to be molded of another embodiment of the present invention.

Fig. 6 is a perspective view of a molded product (head lining of the automobile) made of the material to be molded in the present invention.

Fig. 7 is a drawing to illustrate the forming process of the adhesive layer on the surface layer.

Fig. 8 is a side sectional view of the surface layer.

Fig. 9 is a drawing to illustrate the manufacturing process of the interior material of an embodiment.

Fig. 10 is a side sectional view of the interior material (trunk room interior material).

Fig. 11 is a perspective view of the back side of the surface layer.

Fig. 12 is a drawing to illustrate the pressing process to laminate the surface layer to the base.

Fig. 13 is a side sectional view of the interior material (dash board).

EXAMPLES

The following examples are to illustrate the present invention more concretely but these examples do not limit to the scope of the present invention.

[EXAMPLE 1]

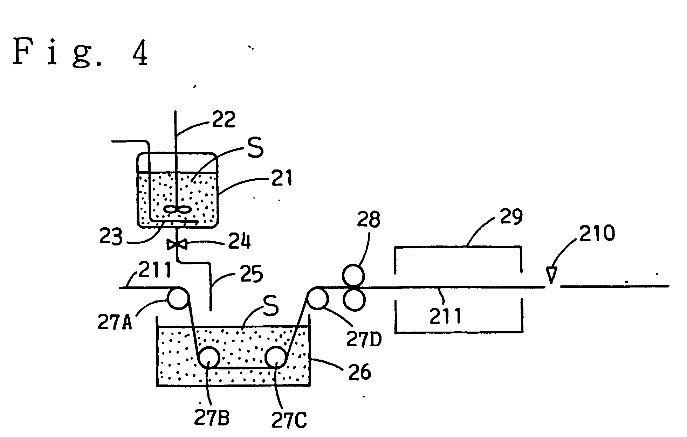

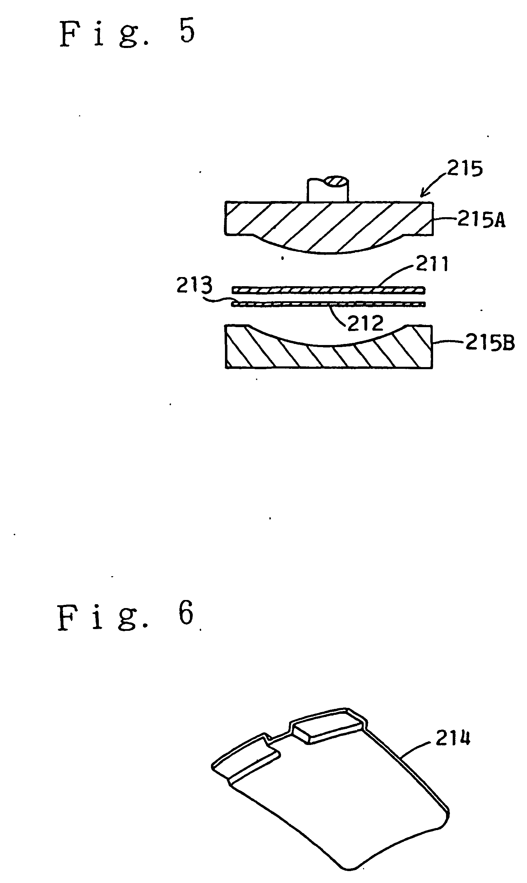

0.5 % by weight of lauryldimethylamine oxide is added to 50 % by weight of aqueous solution of the precondensation polymer of alkylresorcinol and formaldehyde to dissolve said lauryldimethyamine oxide in said aqueous solution. Said aqueous solution S is put in a foaming tank (21) as shown in Fig. 4. Said aqueous solution S in said foaming tank (21) is agitated with an agitator (22) and the air is blown into said aqueous solution from an air nozzle (23) to mechanically foam said aqueous solution. The expansion ratio of said aqueous solution is about 8 times in this case.
Said foamed aqueous solution S is then transferred to a dipping tank (26) through an exhaust pipe (25) by opening a valve (24). The porous material (211) is a needling non-woven fabric of the mixture of polyester fiber and bamboo fiber (6 : 4 weight ratio) and the weight of said needling non-woven fabric is 500 g/m$^2$. Said porous material (211) is dipped in said foamed aqueous solution S in said dipping tank (26) through guide rolls (27A, 27B, 27C, 27D) to contact said foamed aqueous solution S to said porous material (211). Said porous material (211) is then pressed by a squeezing roll (28) to impregnate said foamed aqueous solution in said porous material (211).
Said porous material impregnated with said aqueous solution S is then put in a drying chamber (29) to heat and dry said porous material by hot air at 80°C for 10 minutes and said alkylresorcinolformaldehyde precondensation polymer impregnated in said porous material (211) is slightly condensated to make it at B-stage. After heating and drying, the impregnating amount of said precondensation polymer in said porous material is 15 % by weight.
After heating and drying, the resulting material to be molded (211) is cut in a desirable size by a cutter (210) and set together with a surface layer (212) in a hot press machine (215) consisting of an upper mold part (215A) and a lower mold part (215B) as shown in Fig. 5. Said surface layer (212) (trim cover) is made of a needling non-woven of polypropylene fiber and a polyethylene film (213) is laminated on the back side of said surface layer (212).
Said material to be molded (211) is hot-pressed by said hot-press machine (215) and at the same time said surface layer (212) is laminated on said material (211) intermediating said polyethylene film (213). In said hot press process, press temperature is 180 °C, press pressure is 3 kg/cm$^2$, press time is 0.5 minutes.
As above mentioned, a head lining (214) of the automobile is molded, as shown in Fig. 6.

[EXAMPLE 2]

1 % by weight of sodium laurylsulfate, 0.2 % by weight of titanium dioxide, 0.5 % by weight of polyvinylalcohol, and 4 % by weight of hexamethylenetet ramine as a curing agent are added to 40 % by weight of an aqueous solution of a precondensation polymer of phenol and alkylresorcinol (1 : 2 mol ratio) and formaldehyde. Said aqueous solution is put in the foaming tank (21) as shown in Fig. 4 and the air is blown from the air nozzle (23) into said aqueous solution in said foaming tank (21) with agitation by the agitator (22) to foam said aqueous solution. In this case, expansion ratio of said aqueous solution is 3 times.
Said foamed aqueous solution is impregnated in a foamed polyurethane sheet as a porous material by the same procedure as EXAMPLE 1 and said foamed polyurethane sheet is then heated to dry by hot air at 60°C for 5 minutes and said precocondensation polymer impregnated in said foamed polyurethane sheet is slightly condensated to make it at B-stage. After heating and drying, the impregnating amount of said cocondensation polymer of B-stage in said foamed polyurethane sheet is 15 % by weight.

The resulting material to be molded is hot-pressed at 200 °C for 1 minute and a molded material having a good rigidity is manufactured.

[EXAMPLE 3]

0.5 % by weight of lauryldimethylamine oxide is added to 65 % by weight of a precocondensation polymer of phenol-alkyl resorcinol-formaldehyde to dissolve in said aqueous solution and said aqueous solution is put in the foaming tank (21) as shown in Fig. 4. In said foaming tank (21), the air is blown through the air nozzle (23) into said aqueous solution S with agitation by the agitator (22) and said aqeuous solution S is foamed. In this case, the expansion ratio of said aqueous solution is 6 times.

Said foamed aqueous solution is impregnated in the same porous material (211) as EXAMPLE 1, by the same procedure as EXAMPLE 1 and said porous material (211) impregnated with said aqueous solution is heated to dry by hot air at 80°C for 5 minutes to slightly condensate said precocondenstaion polymer impregnated in said porous material (211) to make it at B-stage. The impregnating amount of said cocondensation polymer of B-stage is 20 % by weight for said porous material (211).

After heating and drying, the resulting molded material (211) is cut in a desirable size by the cutter (210) and hot-pressed by the same procedure as EXAMPLE 1 excepting that the press temperature is settled at 200°C.

Thus a head lining of the automobile (214) is manufactured as shown in Fig. 6.

[EXAMPLE OF PRODUCTION 1]

1 mol of phenol (94g), 2 mols of formaldehyde (37 % by weight aqueous solution) (162g), 0.1 mols of sodium hydroxide (4g), and 0.3 mols of sodium sulfite (37.8g) were put in a reactor equipped with a thermometer, a condenser, and an agitator and said mixture was reacted at 70 °C for 5 hours with agitation. Then, 0.02g of triethanol amine was added and further said mixture was reacted at 90 °C for 0.5 hours to produce a precondensation polymer A.

[EXAMPLE OF PRODUCTION 2]

A precondensation polymer B was produced by the same method as EXAMPLE OF PRODUCTION 1 excepting that 0.1g of triethanol amine was added.

[EXAMPLE OF PRODUCTION 3]

A precondensation polymer C was produced by the same method as EXAMPLE OF PRODUCTION excepting that 0.5g of triethanol amine was added.

[COMPARISON OF PRODUCTION 1]

1 mol of phenol (94g), 2 mol of formaldehyde (37 % by weight aqueous solution)(162g) and 0.1 mol of sodium hydroxide (4g) were put in the same reactor as EXAMPLE OF PRODUCTION 1 and said mixture was reacted at 70°C for 5 hours with agitation and then reacted at 90°C for 0.5 hours to produce a precondensation polymer D.

[TEST 1]

Storage stability, dilution ability with water, and a curing ratio were detected about precondensation polymer A, B, C and D produced in EXAMPLE OF PRODUCTION 1 to 3 and COMPARISON OF PRODUCTION 1.

Storage stability:

Each precondensation polymer solution was kept in a hot air circulation-type thermostat at 30 °C, and change of its viscosity was measured with the passage of time.

Dilution ability with water:

Each precondensation polymer solution was kept in said hot air circulation-type thermostat at 30°C for 60 days and 5g of said precondensation polymer solution was sampled after 60 days and each sample was diluted with water to determine dilution times when white turbidity was generated in said diluted sample.

Curing ratio:

Each precondensation polymer solution was impregnated to a filter paper just after said precondensation polymer solution was produced and the weight of said precondensation polymer impregnated in said filter paper was measured. Then said filter paper was hot-pressed at 50 °C, 80°C, 120 °C, 150 °C and 200°C for 1 minute. Said hot-pressed filter paper was then immersed in a boiling water at 95 to 100 °C for 30 minutes and then said filter paper was dried at 30°C for 24 hours to measure the weight of said precondensation polymer remaining in said filter paper. A curing ratio is calculated by the following expression.

$$\text{Curing ratio} = (\text{ the weight of precondensation polymer}$$

$$\text{after boiling / the weight of precondensation polymer}$$

$$\text{before boiling}) \times 100 \ (\%)$$

The results are shown in Table 1.

[Table 1]

| | | Precondensation polymer | | | |
|---|---|---|---|---|---|
| | | A | B | C | D |
| Storage stability (cps/30 °C) | immediately after | 440 | 455 | 450 | 400 |
| | 5 days later | 445 | 450 | 450 | 480 |
| | 10 days later | 445 | 460 | 460 | 1010 |
| | 20 days later | 450 | 470 | 480 | 6800 |
| | 30 days later | 460 | 475 | 490 | 35000 |
| | 60 days later | 490 | 500 | 520 | gelation |
| Dilution ability with water (times) | immediately after | ∞ | ∞ | ∞ | ∞ |
| | 5 days later | ∞ | ∞ | ∞ | ∞ |
| | 10 days later | ∞ | ∞ | ∞ | ∞ |
| | 20 days later | ∞ | ∞ | ∞ | 20 |
| | 30 days later | ∞ | ∞ | ∞ | 2 |
| | 60 days later | ∞ | ∞ | ∞ | - |
| Curing ratio (%) | 50°C | 0 | 0 | 2 | 35 |
| | 80°C | 5 | 10 | 90 | 40 |
| | 120°C | 15 | 85 | 95 | 70 |
| | 150°C | 90 | 95 | 100 | 85 |
| | 200°C | 100 | 100 | 100 | 100 |

As shown in Table 1, precondensation polymers produced in EXAMPLES OF PRODUCTION 1 to 3 have a good storage stability and dilution ability with water and a sharp curing property respectively. Further the curing temperature can be controlled by the adding amount of amine and it is recognized that said precondensation polymers cure at a lower temperature than said precondensation polymer produced in COMPARISON 1.

[EXAMPLE 4]

1 mol of phenol (94g), 1.5 mol of formaldehyde (37 % by weight aqueous solution)(121.5g), and 0.1 mol of sodium hydroxide (4g) were put in the same reactor as used in EXAMPLE OF PRODUCTION 1 to react said mixture at 60°C for 2 hours with agitation. Then, 0.05 mol of Rongalit (7.7g), 0.1 mol of alkylresorcinol (148g) and ethylamine (3g) were added to said mixture and said mixture was further reacted at 95°C for 3 hours to produce a precondensation polymer E.

The resulting precondensation polymer E was impregnated in a glass wool mat (weight: 1000g/m$^2$) wherein the solid content of said precondensation polymer E in said glass wool mat was 20 % by weight and said glass mat impregnating said precondensation polymer E was heated to dry at 80 °C for 10 minutes such that said precondensation polymer E was slightly condensated to make it at B-stage. After 5 to 60 days, said glass wool mat impregnated with said precondensation polymer E of B-stage was hot-pressed at 150 to 200°C for 3 minutes to obtain a molding mat having a thickness of 5 cm, a specific gravity of 0.02 and the state of said molded glass wool mat was examined. The results are shown in Table 2.

[COMPARISON 1]

1 mol of phenol (94g), 1.5 mol of formaldehyde (37 % by weight aqueous solution)(121.5g) and 0.1 mol of sodium hydroxyde (4g) were put in the same reactor as used in EXAMPLE OF PRODUCTION 1 to react said mixture at 60 °C for 2 hours and then at 95 °C for 3 hours with agitation and a precondensation polymer F was produced.

The resulting precondensation polymer F was impregnated in a glass wool mat similarly to EXAMPLE 4 and said glass wool mat was hot-pressed. The state of the resulting molded material was examined and the results are shown in Table 2.

[Table 2]

| Pressing conditions | Passage of time | Molding condition | |
|---|---|---|---|
| | | E | F |
| 150 °C × 3 minutes | 5 days later | ○ | × × |
| | 10 days later | ○ | × × |
| | 20 days later | ○ | × × |
| | 40 days later | ○ | × |
| | 60 days later | ○ | × |
| 180 °C × 3 minutes | 5 days later | ○ | ○ |
| | 10 days later | ○ | ○ |
| | 20 days later | ○ | Δ |
| | 40 days later | ○ | × |
| | 60 days later | ○ | × |
| 200 °C × 3 minutes | 5 days later | ○ | ○ |
| | 10 days later | ○ | Δ |
| | 20 days later | ○ | Δ |
| | 40 days later | ○ | × |
| | 60 days later | ○ | × |

○ : Molding is wholly good and thermosetting resin in the molded material is sufficiently cured during molding.

Δ : Defective molding parts are partially observed.

× : Thermosetting resin may be cured during molding but defective molding parts are wholly observed and thickness of the resulting molded material is more than 5 cm.

× × : Thermosetting resin may not be cured during molding and molding is impossible.

As shown in Table 2, said precondensation polymer of EXAMPLE 4 shows a good curing property after a long storage while said precondensation polymer of COMPARISON 1 gradually cures with the passage of time such that adhesiveness of said glass wool is not enough and defect of molding is resulted.

[EXAMPLE 5]

A mixture of 1 mol of phenol (94g), 2 mol of formaldehyde (37% by weight aqueous solution)(162g), 0.05 mol of sodium hydroxide (2g) and 0.2 mol of sodium metabisulfite (38g) were reacted at 75°C for 6 hours in the same reactor as used in EXAMPLE OF PRODUCTION 1. 90g of said reacted mixture, 1 mol of phenol (94g), 2 mol of formaldehyde (37% by weight aqueous solution) (162g) and 0.01 mol of sodium hydroxide (0.4g) and further 0.03 mol of ammonia (25% by weight of aqueous solution)(2g) were mixed to react at 70°C for 10 hours. Then 0.06 mol of 5-methylresorcinol (7.5g) was added to said reacted mixture. Said mixture was further reacted at 90 °C for 1 hour to produce a precondensation polymer G.

The resulting precondensation polymer G was impregnated in a non-woven fabric of 100 % by weight of polyester fiber (weight: 100g/m$^2$) wherein the impregnating amount of said precondensation polymer G was adjusted to be 15% by weight as a solid and then said non-woven fabric impregnated with said precondensation polymer G was heated to dry at 90°C for 3 minutes to slightly condensate said precondensation polymer to make it at B-stage. Said sheet was hot-pressed at 120°C for 1 minute to mold a molded material having a thickness of 10mm and a specific gravity of 0.01. Said molded material has a good moldability.

[EXAMPLE 6]

2 parts by weight of hexamethylenetetramine, 5 parts by weight of a thermoplastic expandable forming agent which is a microcapsule of isobutane, 2 parts by weight of paraffin wax and 8 parts by weight of antimony oxide were added to said precondensation polymer G produced in EXAMPLE 5 and said mixture was agitated to prepare a uniform mixture. The resulting mixture was coated on a fiber sheet (hemp fiber/kenaf fiber/reclaimed fiber = 1/1/1 weight ratio) adjusting a coating amount to be 20% by weight as a solid. After coating, said fiber sheet was heated to dry at 70°C for 5 minutes to condensate slightly said precondensation polymer coated on said fiber sheet to make it at B-stage. The resulting fiber was put on a polyester film as a surface layer intermediating a vinylacetate-ethylene copolymer film (melting point:85 °C) and molded by hot-press at 140°C for 1 minute to manufacture a molded material having a high rigidity.

[EXAMPLE 7]

Said precondensation polymer C produced in EXAMPLE OF PRODUCTION 3 was sprayed on a sheet which was a felt of reclaimed polyester fiber (weight 1500g/m$^2$) adjusting a coating amount to be 20% by weight as a solid. After coating, said sheet was heated to dry at 60°C for 5 minutes to condensate slightly said precondensation polymer C to make it at B-stage. The resulting sheet was hot-pressed at 80°C for 6 minutes to manufacture a molded material having a thickness of 2mm and a specific gravity of 0.1 and a high rigidity.

[EXAMPLE 8]

A mixture of 1 mol of phenol, 2.5 mol of formaldehyde (37% by weight aqueous solution), 0.1 mol of sodium hydroxide, and 0.1 mol of sodium sulfite were reacted at 100°C for 2 hours to produce a sulfomethylated monohydricphenol-formaldehyde precondensation polymer H.

Said precondensation polymer H was impregnated in a non-woven fabric sheet consisting of 80% by weight of polyester and 20% by weight of polyamide (weight=100g/m $^2$) adjusting the impregnating amount to be 15% by weight as a solid. Said non-woven fabric sheet impregnated with said precondensation polymer H was heated to dry at 100 °C for 10 minutes to condensate slightly said precondensation polymer H to make it at B-stage.

The resulting sheet material to be molded was put on a foamed melamine resin (expansion ratio : 5 times) and hot-pressed at 180°C for 3 minutes. The resulting molded sheet material (cured sheet material) had a good adhesiveness, moldability and a high rigidity.

[EXAMPLE 9]

0.3 mol of 5-methylresorcinol was added to said sulfomethylated monohydricphenol-aldehyde precondensation polymer H of EXAMPLE 8. Said mixture was reacted at 100°C for 0.5 hours to produce a sulfomethylation monohydricphenol-polyhydricphenol-aldehyde precondensation polymer I.

Said precondensation polymer I was impregnated in a fabric sheet consisting of 90% by weight of acrylic fiber and 10% by weight of carbon fiber (weight = 50g/m$^2$), an impregnating amount wast adjusted to be 30% by weight as a solid and then said fabric sheet impregnated with said precondensation polymer I was heated at 100°C for 10 minutes to condensate slightly said precondensation polymer I impregnated in said fabric sheet to make it at B-stage.

On the other hand, a wooden foam sheet consisting of 100 parts by weight of wood flake, 20 parts by weight of resol-type phenol resin and 7 parts by weight of a micro capsule-type foaming agent was manufactured.

Said fabric sheet impregnated with precondensation polymer I of B-stage was put on said wooden foam sheet to be hot-pressed at 200°C for 1 minute. A molded laminating sheet material manufactured has a high rigidity wherein said fabric sheet impregnated with cured condensation polymer has a good adhesiveness to said wooden foam sheet and has a good moldability.

[COMPARISON 2]

The same fabric sheet as used in EXAMPLE 9 excepting that said precondensation polymer was not impregnated was put on the same wooden foam sheet and hot-pressed in the same conditions as applied in EXAMPLE 9. In the resulting molded sheet material, said fabric sheet had a poor adhesiveness and peeled partially from said wooden foam sheet and had a poor moldability and was impossible to mold in a desirable shape.

[EXAMPLE 10]

A mixture of 1 mol of phenol, 2 mol of formaldehyde (37% by weight aqueous solution) and 0.1 mol of sodium hydroxide were reacted at 100°C for 1 hour. Then 0.2 mol of sodium sulfite was added to said mixture and said mixture was further reacted at 100°C for 40 minutes to produce a sulfomethylated monohydricphenol-aldehyde precondensation polymer J.

On the other hand, a mixture of 2.5 mol of 5-methylresorcinol, 1 mol of formaldehyde (37% by weight aqueous solution) and 0.15 mol of sodium hydroxide was reacted at 60°C for 8 hours to produce a polyhydricphenol-aldehyde precondensation polymer K.

Said precondensation polymer J and said precondensation polymer K were mixed together and the resulting mixture was reacted at 70 °C for 2 hours to produce a sulfomethylated monophenol-polyphenol precocondensation polymer L.

5 parts by weight of an acrylic ester emulsion (solid content:50% by weight), 0.02 parts by weight of fluoric water repellent (20% by weight), and 5 parts by weight of a flame-retardant containing organophosphorus and nitrogen (30% by weight) and further 10 parts by weight of paraformaldehyde as a curing agent were added to 100 parts by weight of said precocondensation polymer L. Said mixture was impregnated in a non-woven fabric sheet consisting of 70% by weight of glass fiber, 20% by weight of polyester fiber and 10% by weight of kenaf fiber (weight:100g/m$^2$) an impregnating amount was adjusted to be 25% by weight. Said non-woven fabric sheet was heated at 80 °C for 5 minutes to condensate slightly said precocondensation polymer L to make it at B-stage. Then said non-woven fabric sheet impregnated with said precocondensation polymer L of B-stage was hot-pressed at 150 °C for 1 minute in a desirable shape with curing.

Said molded, cured sheet was inserted in a molding machine and a phenol resin solution containing an organic foaming agent was put in said molding machine through the inlet of said molding machine to mold at 200 °C for 4 minutes. The resulting molded material with said molded, cured sheet has a high rigidity wherein said molded, cured sheet has a good adhesiveness and moldability.

[EXAMPLE 11]

A dispersion of a hot-melt type adhesive powder was prepared by the following formulation.

Ethylene-vinylacetate copolymer (EVA) powder[*1] : 35% by weight
Water: 65% by weight

A needling non-woven fabric of polyester fiber was used as a surface layer (trim cover).

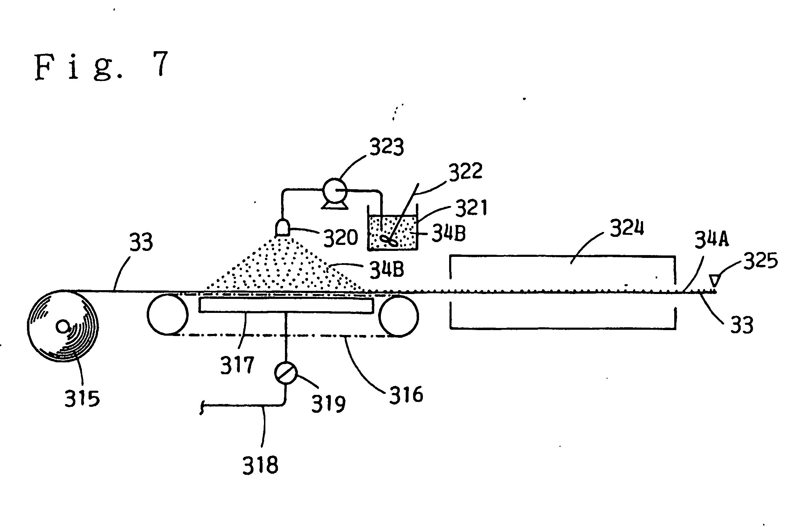

As shown in Fig. 7, said surface layer (33) was drawn from a roll (315) and led on a porous belt conveyer (316) made of a net, a felt, and the like. A suction box (317) to which a vacuum path (318) with a valve (319) connects is attached to the back side of said porous belt conveyer (316) and said surface layer (33) was sucked by said suction box through said porous belt conveyer (316). Said dispersion of said hot-melt type adhesive powder (34B) was sprayed to the surface of said surface layer (33) by a spraying machine (320) to which said dispersion (34B) agitated by an agitator (322) in an agitation tank (321) was supplied by a pump (323).

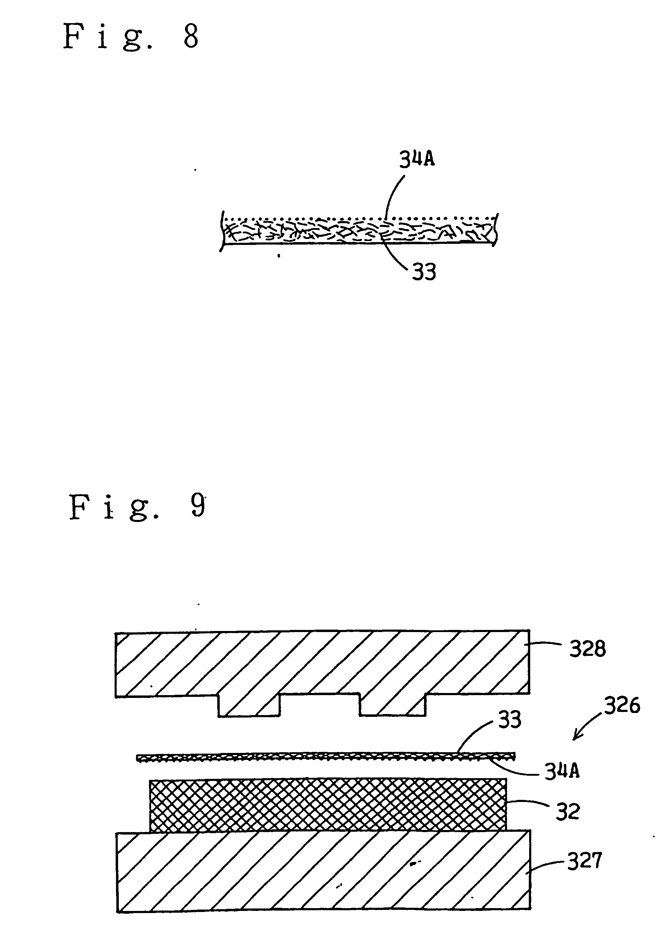

Said dispersion (34B) of said hot-melt type adhesive powder was thus coated in dot on the surface of said

[*1] Melting point 90 °C, 200 mesh pass

surface layer (33) adjusting a coating amount to be 15g/m$^2$ as a solid. As above mentioned, since said surface layer (33) was sucked by said suction box (317) from the back side during said coating process by spray, said hot-melt type adhesive powder was sucked on the surface of said surface layer (33) without rebounding and scattering by spraying impact. After coating, said surface layer (33) was led into a drying chamber (324) and said surface layer was heated to dry at 150 °C for 2 minutes in said drying chamber (324). As above mentioned, EVA powder as a hot-melt type adhesive was coated and dotted on the surface of said surface layer (33) to form an adhesive layer (34A) as shown in Fig. 8 and then said surface layer (33) was cut in a desirable size.

On the other hand, a precondensation polymer of phenol resin was impregnated in a fiber sheet which is a non-woven fabric made of a reclaimed fiber in an amount of 30% by weight and then said fiber sheet was heated to dry at 70 °C to condensate slightly said precondensation polymer to make it at B-stage to manufacture a base (32).

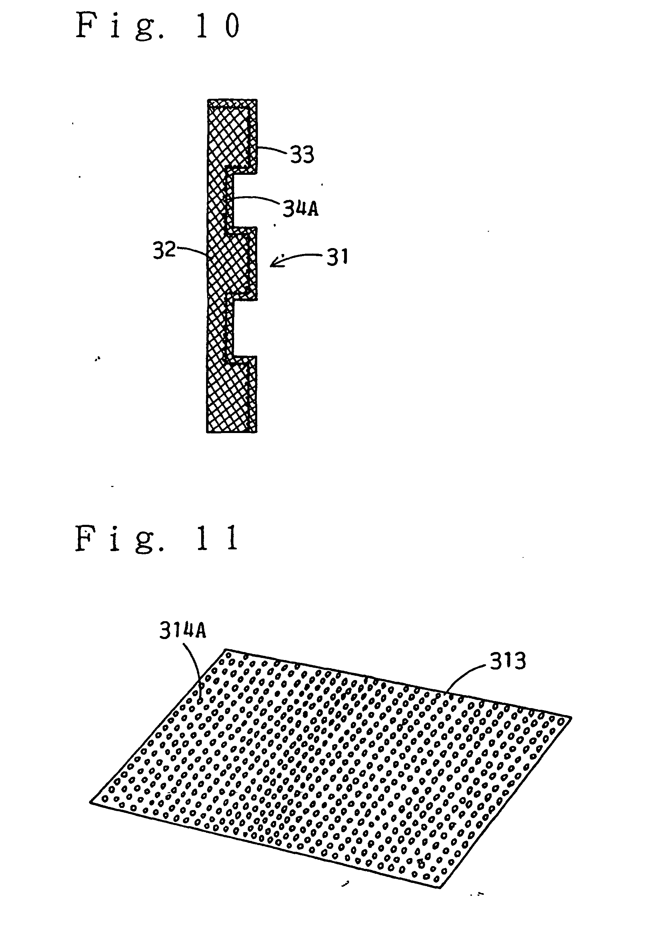

As shown in Fig. 9, said surface layer (33) was put on said base (32) and said base (32) and said surface layer (33) were set in a hot-press machine (326) consisting of a lower mold part (327) and an upper mold part (328) and hot-pressed to mold an interior material (31) of the automobile as shown in Fig. 10. During said hot-pressing, said adhesive layer (34A) was softened and said surface layer (33) was attached to said base (32) by said softened adhesive layer (34) and said interior material (31) has a sharp molding shape.

[EXAMPLE 12]

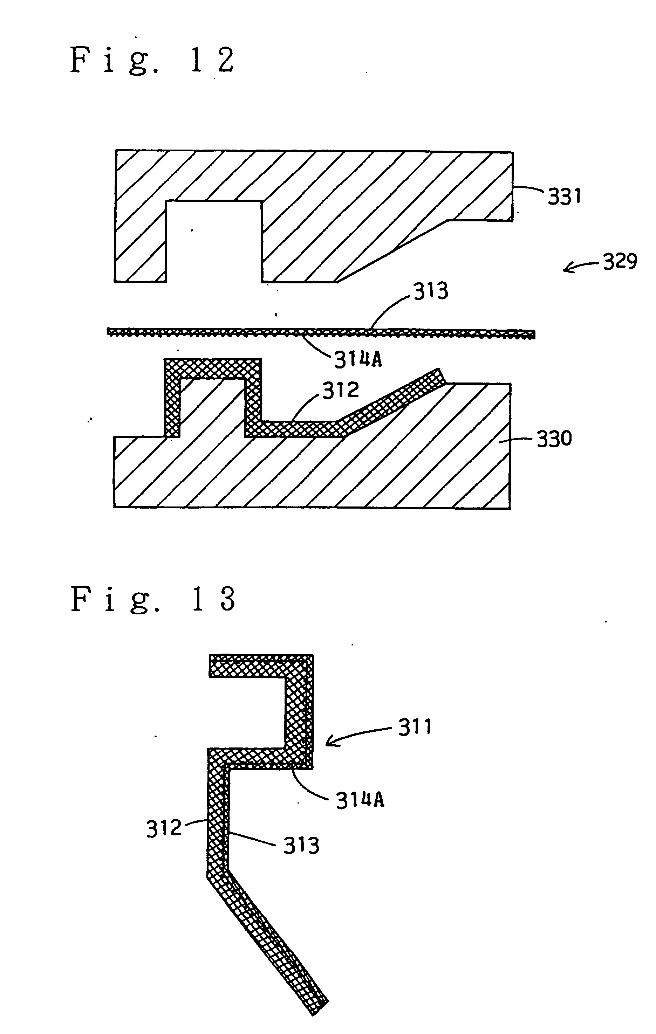

A dotted adhesive layer (314A) was formed on a surface layer (313) which is a polyvinylchloride sheet by the silk-screen printing as shown in Fig. 11.

On the other hand, a phenol resin was impregnated in a reclaimed fiber sheet in an amount of 30% by weight and said reclaimed fiber sheet was heated to dry at 100°C for 7 minutes to condensate slightly said phenol resin to make it at B-stage. The resulting fiber sheet was hot-pressed at 250°C to manufacture a base (312) of dash-board. Said base (312) was set in a surface layer attaching machine (329) as shown in Fig. 12.

And said surface layer (313) was put on said base (312) wherein said adhesive layer (314A) was heated to be softened and said surface layer (313) was attached to said base (312) by pressing said surface layer attaching machine (329).

As above mentioned, a lining (311) of the dash-board of the automobile having a sharp molded shape as shown in Fig. 13 was manufactured.

In EXAMPLES 11 and 12, the adhesive layers are formed on the surface layers respectively but in the present invention the adhesive layer may also be formed on the base.

[Industrial Utility]

Said material to be molded or said molded material can be used as an interior of vehicle such as door trim, a dash board, head lining, flooring, an insulator hood, dash inner, dash outer, an engine under cover, trunk side trim, and the like, a building material such as wall material and the like, and further a pad in bed and the like, a cushion of a seat, a sofa and the like.

**Claims**

1.    A material to be molded consisting of a porous material which is impregnated with a phenolic resin which is a condensating polymer of phenolic compound and aldehyde and/or aldehyde donor wherein said phenolic resin is partially or wholly sulphomethylated and/or sulfimethylated and said phenolic resin is at B-stage.

2.    A material to be molded in accordance with Claim 1, wherein said phenolic resin is produced by condensation of phenolic compound and aldehyde and/or aldehyde donor by using ammonia and/or amine.

3.    A material to be molded in accordance with Claim 1 or 2, wherein said material to be molded is in the shape of sheet.

4.    A molded material consisting of a base sheet and a cured material of Claim 3 laminated partially or wholly on said base sheet as a surface layer wherein phenolic resin impregnated in said material of Claim 3 is cured.

5.    An interior material consisting of a base which is a material in accordance with Claim 1, 2 or 3 wherein phenolic resin impregnated in said material is cured and a surface layer laminated on the surface of said base.

6.    An interior material in accordance with Claim 5, wherein said base sheet and said surface layer are bonded together by an adhesive dotted in the lamination interface.

7. A manufacturing method of material to be molded comprising: a) preparing a precondensation polymer of phenolic compound and aldehyde and/or aldehyde donor which is partially or wholly sulfomethylated and/or sulfimethylated by adding a sulfomethylation reagent and/or a sulfimethylation reagent at any stage, b) impregnating said porous material with said precondensation polymer solution, and c) curing and drying said porous material to condensate slightly said precondensation polymer to make it at B-stage.

8. A method in accordance with Claim 7, wherein said precondensation polymer solution is foamed chemically and/ or mechanically and said porous material is contacted with said foamed precondensation polymer solution and then said porous material is pressed to impregnate said foamed precondensation polymer solution into said porous material.

9. A method in accordance with Claim 7 or 8, wherein said precondensation polymer of said thermosetting resin is phenolic precondensation polymer produced by condensation of phenolic compound and aldehyde and/or aldehyde donor by using ammonia and/or amine.

**Patentansprüche**

1. Formmaterial aus einem porösen Material, das mit einem Phenolharz imprägniert ist, das ein Kondensationspolymer aus einer Phenolverbindung und einem Aldehyd und/oder einem Aldehyddonator ist, wobei das Phenolharz teilweise oder vollständig sulfomethyliert und/oder sulfimethyliert ist, wobei das Phenolharz ein Phenolharz in der B-Stufe ist.

2. Formmaterial nach Anspruch 1, wobei das Phenolharz durch Kondensation einer Phenolverbindung und eines Aldehyds und/oder eines Aldehyddonators unter Verwendung von Ammoniak und/oder Amin hergestellt wird.

3. Formmaterial nach Anspruch 1 oder 2, wobei das Formmaterial ein schichtförmiges Material ist.

4. Formmaterial, bestehend aus einer Basisschicht und einem ausgehärteten Material nach Anspruch 3, das teilweise oder vollständig als Oberflächenlage auf die Basisschicht auflaminiert ist, wobei das in das Material nach Anspruch 3 imprägnierte Phenolharz ausgehärtet ist.

5. Inneneinrichtungsmaterial aus einer Basis aus einem Material nach Anspruch 1, 2 oder 3, wobei das in das Material imprägnierte Phenolharz ausgehärtet ist und eine Oberflächenlage auf die Oberfläche der Basis auflaminiert ist.

6. Inneneinrichtungsmaterial nach Anspruch 5, wobei die Basisschicht und die Oberflächenlage durch einen in einer Laminierungsfläche punkt- oder fleckenförmig aufgebrachten Klebstoff miteinander verbunden sind.

7. Verfahren zum Herstellen eines Formmaterials mit den Schritten:

   a) Vorbereiten eines Vorkondensationspolymers aus einer Phenolverbindung und einem Aldehyd und/oder einem Aldehyddonator, das durch Hinzufügen eines Sulfomethylierungsreagens und/oder eines Sulfimethylierungsreagens in einer beliebigen Stufe teilweise oder vollständig sulfomethyliert und/oder sulfimethyliert wird;
   b) Imprägnieren des porösen Materials mit der Vorkondensationspolymerlösung; und
   c) Aushärten und Trocknen des porösen Materials, um das Vorkondensationspolymer leicht zu kondensieren und ein Polymer der B-Stufe zu erhalten.

8. Verfahren nach Anspruch 7, wobei die Vorkondensationspolymerlösung chemisch und/oder mechanisch geschäumt und das poröse Material mit der geschäumten Vorkondensationspolymerlösung in Kontakt gebracht wird, woraufhin das poröse Material gepreßt wird, um die geschäumte Vorkondensationspolymerlösung in das poröse Material zu imprägnieren.

9. Verfahren nach Anspruch 7 oder 8, wobei das Vorkondensationspolymer des aushärtbaren Harzes ein Phenolvorkondensationspolymer ist, das durch Kondensation einer Phenolverbindung und eines Aldehyds und/oder eines Aldehyddonators unter Verwendung von Ammoniak und/oder Amin hergestellt wird.

**Revendications**

1. Matériau susceptible d'être moulé, constitué d'un matériau poreux qui est imprégné d'une résine phénolique consistant en un polymère de condensation de composé phénolique et d'aldéhyde et/ou de donneur d'aldéhyde, ladite résine phénolique étant partiellement ou complètement sulfométhylée et/ou sulfiméthylée et ladite résine phénolique étant en phase B.

2. Matériau susceptible d'être moulé selon la revendication 1, dans lequel ladite résine phénolique est produite par condensation de composé phénolique et d'aldéhyde et/ou de donneur d'aldéhyde par action d'ammoniac et/ou d'amine.

3. Matériau susceptible d'être moulé selon la revendication 1 ou 2, dans lequel ledit matériau susceptible d'être moulé a la forme d'une feuille.

4. Matériau moulé constitué d'une feuille de base et d'un matériau durci de la revendication 3 stratifié partiellement ou complètement sur ladite feuille de base sous la forme d'une couche de surface, dans lequel la résine phénolique imprégnée dans ledit matériau de la revendication 3 est durcie.

5. Matériau de revêtement intérieur constitué d'une base qui est un matériau selon la revendication 1, 2 ou 3, dans lequel la résine phénolique imprégnée dans ledit matériau est durci et une couche de surface est stratifiée sur la surface de ladite base.

6. Matériau de revêtement intérieur selon la revendication 5, dans lequel ladite feuille de base et ladite couche de surface sont collées ensemble par un adhésif appliqué par points dans l'interface de stratification.

7. Procédé de fabrication de matériau susceptible d'être moulé comprenant:

   a) la préparation d'un polymère de pré-condensation de composé phénolique et d'aldéhyde et/ou de donneur d'aldéhyde qui est partiellement ou complètement sulfométhylé et/ou sulfiméthylé par addition d'un réactif de sulfométhylation et/ou d'un réactif de sulfiméthylation à n'importe quel stade,
   b) l'imprégnation dudit matériau poreux avec ladite solution de polymère de pré-condensation, et
   c) le durcissement et le séchage dudit matériau poreux pour condenser légèrement ledit polymère de pré-condensation pour le passer en phase B.

8. Procédé selon la revendication 7, dans lequel ladite solution de polymère de pré-condensation est expansée chimiquement et/ou mécaniquement et ledit matériau poreux est mis en contact avec ladite solution de polymère de pré-condensation expansée et, ensuite, ledit matériau poreux est pressé pour imprégner ladite solution de polymère de pré-condensation expansée dans ledit matériau poreux.

9. Procédé selon la revendication 7 ou 8, dans lequel ledit polymère de pré-condensation de ladite résine thermodurcissable est un polymère de pré-condensation phénolique produit par condensation de composé phénolique et d'aldéhyde et/ou de donneur d'aldéhyde par action d'ammoniac et/ou d'amine.

Fig. 1

Fig. 2

# Fig. 3

# Fig. 4

EP 0 984 031 B1

# Fig. 5

# Fig. 6

Fig. 7

325
34A
33
324
322
321
34B
323
34B
320
316
319
317
318
33
315

Fig. 8

Fig. 9

Fig. 10

Fig. 11

Fig. 12

Fig. 13